Europäisches Patentamt

European Patent Office

Office européen des brevets

(19)

(11) Numéro de publication : **0 445 047 A1**

## (12) DEMANDE DE BREVET EUROPEEN

(21) Numéro de dépôt : **91420050.6**

(22) Date de dépôt : **13.02.91**

(51) Int. Cl.⁵ : **F02B 63/04, F16M 3/00**

(30) Priorité : **02.03.90 FR 9002904**

(43) Date de publication de la demande :
**04.09.91 Bulletin 91/36**

(84) Etats contractants désignés :
**AT BE CH DE DK ES FR GB GR IT LI LU NL SE**

(71) Demandeur : **LOMBARDINI FRANCE**
**Zone Industrielle Nord, Rue du Nizerand**
**F-69400 Arnas (FR)**

(72) Inventeur : **Chollet, Jean-Louis**
**24 rue Champvert**
**F-69005 Lyon (FR)**

(74) Mandataire : **Guerre, Dominique et al**
**Cabinet Germain et Maureau 20 Boulevard**
**Eugène Deruelle BP 3011**
**F-69392 Lyon Cédex 03 (FR)**

(54) **Ensemble portatif associant un moteur thermique et une machine, par exemple groupe électrogène.**

(57)    Ensemble portatif comprenant un châssis (1) de support délimitant un volume intérieur (2) utile de forme générale parallélipipédique, un moteur thermique (3), et une machine (4) disposée en ligne avec ledit moteur, accouplée et entraînée par ce dernier, ledit moteur et ladite machine étant montés sur ledit châssis, en étant intégrés dans le volume utile, caractérisé en ce que le châssis de support (1) consiste en un corps creux auto-porteur de sustentation du moteur thermique (3) et de la machine (4), comprenant au moins un élément à double paroi (5a,5b) (6a,6b) fermée sur elle-même, obtenu de manière monobloc en matière plastique, le corps creux ayant généralement une forme épousant au moins une partie du contour du volume intérieur utile (2), et comprenant au moins un plancher (1a) sur lequel sont fixés au travers de la double paroi le moteur (3) et la machine (4), et deux flancs (1b,1c) perpendiculaires audit plancher.

FIG.2

# ENSEMBLE PORTATIF ASSOCIANT UN MOTEUR THERMIQUE ET UNE MACHINE, PAR EXEMPLE GROUPE ELECTROGENE

La présente invention concerne de manière générale un ensemble portatif associant un moteur thermique et une machine disposée en ligne avec ledit moteur, accouplée et entraînée par ce dernier.

Par "machine", on entend tout organe ou équipement consommant la puissance délivrée par le moteur thermique, à différentes fins. Au rang de telles machines, on peut citer les pompes, les alternateurs électriques. Dans ce dernier cas, l'invention concerne en particulier les groupes électrogènes.

La présente invention est maintenant décrite et définie par référence aux groupes électrogènes, étant entendu pour les raisons précédentes que l'invention ne saurait être limitée à une telle application.

On connait des groupes électrogènes portatifs, comprenant un châssis de support constitué par un assemblage mécano-soudé de tubes métalliques, et délimitant un volume intérieur utile de forme générale parallélépipédique. Un moteur thermique, par exemple un moteur à essence, et un alternateur, solidarisés l'un à l'autre pour former un bloc rigide, sont montés sur le châssis, en étant intégrés dans le volume utile.

Une telle solution présente les inconvénients suivants :

– le châssis mécano-soudé ajoute au poids de l'ensemble portatif

– le châssis transmet, voire amplifie les vibrations générées par le bloc moteur / alternateur

– sauf à prévoir des structures ou capotages insonorisants, qui ajoutent à l'encombrement de l'ensemble portatif, le groupe électrogène apparaît générer un bruit important, limitant souvent son usage à l'extérieur de locaux d'habitation par exemple.

La présente invention a pour objet un châssis de support, rompant avec une structure du type mécano-soudé, et apportant à la fois une bonne résistance mécanique ou rigidité à l'ensemble portatif, un amortissement ou une absorption effective des vibrations du bloc moteur / alternateur, et jouant aussi, au moins pour partie, le rôle d'un capotage d'insonorisation.

Conformément à la présente invention, le châssis de support consiste en un corps creux auto-porteur de sustentation du moteur thermique et de la machine, alternateur par exemple. Ce corps creux comprend un ou plusieurs éléments à double paroi fermée sur elle-même, obtenus de manière monobloc en matière plastique, par exemple par rotomoulage ; en cas de pluralité de ces éléments, ceux-ci sont assemblés les uns aux autres, par exemple par l'intermédiaire du bloc moteur / alternateur. Le corps creux a généralement une forme ou profil épousant au moins pour partie le contour d'un volume intérieur utile généralement parallélépipédique. Et ce corps creux comprend au moins un plancher sur lequel sont fixés au travers de la double paroi le moteur et l'alternateur, et deux flancs perpendiculaires audit plancher.

La présente invention est maintenant décrite par référence aux dessins annexés, dans lesquels :

– la figure 1 représente une vue en perspective d'un ensemble portatif selon l'invention, et plus précisément d'un groupe électrogène, associant par conséquent un moteur thermique et un alternateur.

– la figure 2 représente une vue en coupe, selon la ligne II-II de la figure 1, du groupe électrogène selon cette dernière, et plus précisément du corps creux de support, le bloc moteur-alternateur étant représenté schématiquement par un trait mixte

– la figure 3 représente une vue en coupe selon la ligne III-III des figures 2 et 4 du groupe selon la figure 1, le bloc moteur-alternateur étant toujours représenté de manière schématique par un trait mixte

– la figure 4 représente une vue en coupe selon la ligne IV-IV de la figure 3, du corps creux de support du bloc moteur-alternateur

– la figure 5 représente une vue en coupe selon la ligne V-V de la figure 4, du corps creux de support du bloc moteur-alternateur

– la figure 6 représente une vue en coupe partielle selon la ligne VI-VI de la figure 3 du corps creux de support

– la figure 7 représente une vue, en coupe partielle selon la ligne VII-VII de la figure 3, des plaques permettant la fixation du corps creux de support sur l'alternateur

– la figure 8 représente une vue en coupe partielle selon la ligne VII-VII de la figure 3 du corps creux de support.

Un groupe électrogène selon l'invention comprend les éléments essentiels suivants :

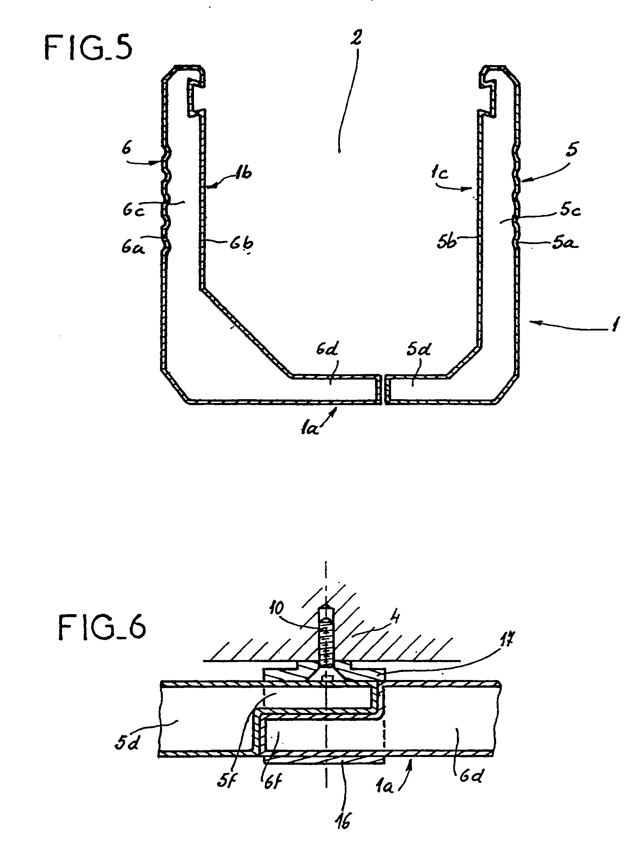

– un châssis de support 1, consistant selon l'invention en un corps creux auto-porteur de sustentation, comprenant deux éléments ou flasques 5 et 6, chacun à double paroi fermée sur elle-même, à savoir (5a, 5b), et (6a et 6b), obtenus chacun de manière monobloc en matière plastique, par exemple par rotomoulage ; cette structure à double paroi fermée sur elle-même est plus particulièrement montrée à la figure 5, l'indice a étant affecté à la paroi extérieure et l'indice b à la paroi intérieure

– un bloc rigide 7, solidarisant en ligne l'un à l'autre un moteur thermique 3 et un alternateur 4, l'alternateur 4 étant accouplé et entraîné en rotation par le moteur 3 ; ce bloc rigide 7 est intégré de manière générale dans le volume intérieur 2 utile délimité pour partie par le châssis ou corps creux 1.

Le corps creux selon l'invention, obtenu en matière plastique, apporte au surplus l'avantage essentiel d'une excellente isolation électrique de l'alternateur par rapport à l'extérieur du groupe électrogène.

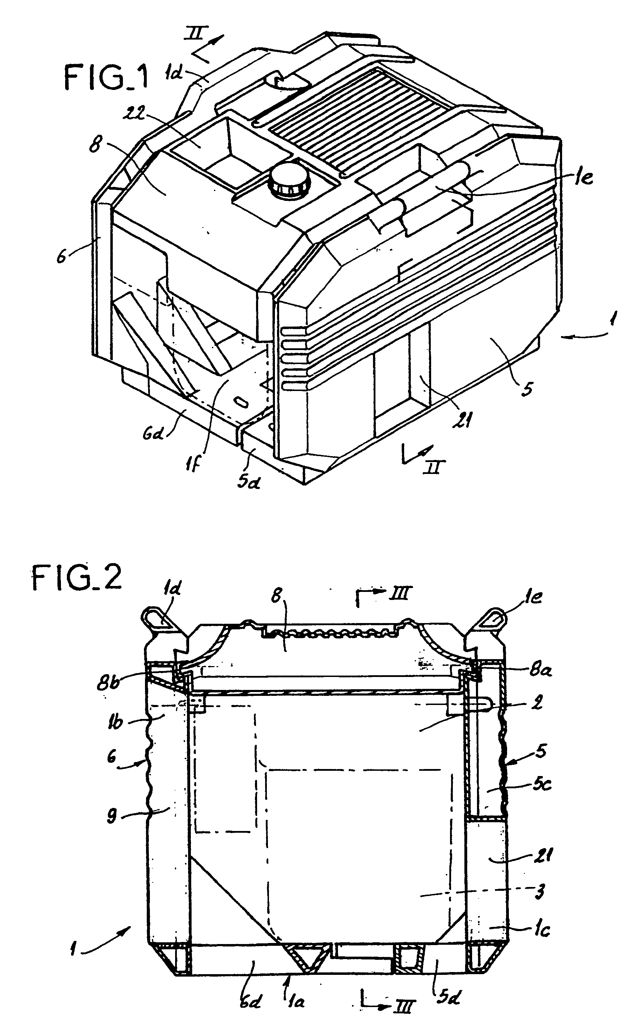

Le corps creux 1, composé par l'assemblage des flasques 5 et 6 par l'intermédiaire du bloc rigide 7, comme décrit ci-après, a de manière générale une forme parallélipédique, définissant le volume intérieur utile 2 de forme comparable. En section verticale perpendiculaire à l'axe d'alignement du moteur 3 et de l'alternateur 4, telle que montrée par la figure 2, le corps creux 1 a un profil général en U, les deux branches du U étant jointes à leurs parties supérieures par le réservoir 8, comme décrit ci-après. En conséquence, le corps creux comprend une partie inférieure sensiblement plane 1a, formant plancher sur lequel sont fixés le moteur 3 et l'alternateur 4, au travers de la double paroi du corps 1, et deux flancs sensiblement plans, 1b et 1c, d'extension perpendiculaire au plancher 1a. Pour obtenir la forme générale précitée, correspondant à l'assemblage des flasques 5 et 6, ces derniers sont constitués chacun par une paroi sensiblement plane ou droite, à savoir respectivement 5c et 6c, correspondant chacun à un flanc du corps creux 1, à savoir respectivement 1c et 1b, et par un rebord perpendiculaire à la paroi droite ou plane précitée, à savoir 5d et 6d respectivement, ce rebord correspondant pour une partie au plancher 1a du corps creux 1. La largeur du rebord 6d est supérieure à celle du rebord 5d.

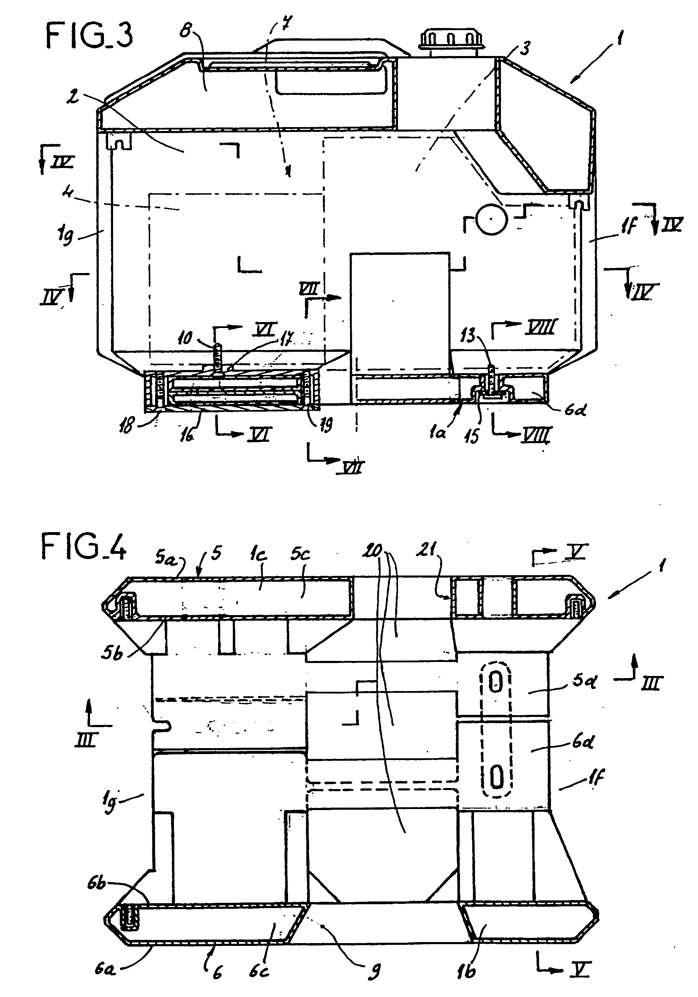

Comme le montrent les figures 3, 6, 7, et 8, c'est le bloc rigide 7 qui permet l'assemblage et la liaison des flasques 5 et 6.

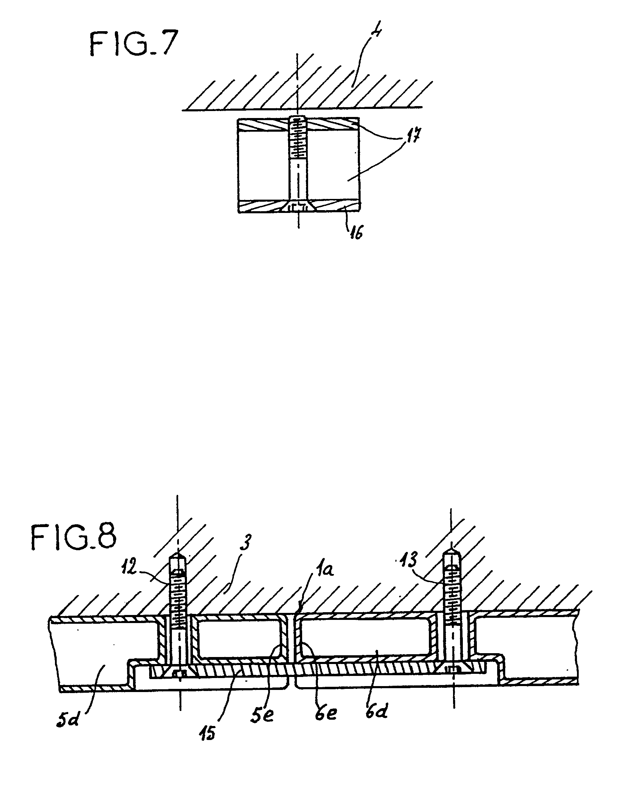

A cette fin, une plaque 17 est fixée sur l'alternateur 4 par une vis 10. Une contre-plaque 16, fixée sur la plaque 17 par l'intermédiaire de deux vis 18 et 19, prend en sandwich et assemble de manière jointive les deux entailles 5f et 6f des deux rebords 5d et 6d ; cf figures 6 et 7.

Du côté opposé, une plaque 15, serrée par deux vis 12 et 13 vissées sur le bloc moteur 1, relie, de manière jointive avec un jeu fonctionnel si nécessaire, les deux bordures droites 5e et 6e des rebords 5d et 6d respectivement (cf figure 8).

Par ailleurs, les deux flancs 1b et 1c du corps creux intègrent à leur partie supérieure deux poignées 1d et 1e de transport respectivement situées en vis a vis.

Le fond 1a obtenu par l'assemblage des rebords 5d et 6d ménage des découpes 20 montrées à la figure 4, permettant une aération par le dessous du bloc 7.

Le réservoir 8 de combustible nécessaire au moteur thermique présente une forme générale substantiellement plate, et est disposé au-dessus du moteur 3 et de l'alternateur 4, en reliant les deux flancs 1b et 1c du corps creux autoporteur. Ainsi l'ensemble du corps 1 et du réservoir 8 acquiert une rigidité tubulaire, autour du bloc 7 associant le moteur 3 et l'alternateur 4. Les deux bords droits 8a et 8b du réservoir 8 sont assemblés aux deux flancs 1c et 1b du corps creux 1 respectivement, selon une ligne de jonction consistant en un emboîtement en queue d'aronde (cf profil montré par la figure 5).

Comme le montre la figure 4, une des faces du corps creux 1, à savoir 1f, par exemple la face avant située entre les deux flancs 1b et 1c, est totalement dégagée, et est en conséquence en relation avec l'aspiration de l'air frais nécessaire au moteur thermique 3. Cette face avant permet d'accéder à toutes les commandes et organes du moteur 3. L'un, à savoir 1b, des flancs du corps creux comporte par ailleurs un passage 9 transversal, protégé par une grille non représentée, en relation avec l'échappement du moteur thermique 3.

L'autre face 1g du corps creux 1, situé entre les deux flancs 1b et 1c, est totalement dégagée, et est par conséquent en relation à la fois avec l'entrée d'air frais et la sortie d'air chaud, nécessaires au fonctionnement de l'alternateur 4.

Une ouverture 21 disposée dans l'autre flanc 1c du corps creux 1 comporte une porte amovible non représentée, permettant la vidange et le remplissage en huile du moteur thermique.

Une autre ouverture 22 disposée dans le réservoir 8 comporte une porte amovible permettant le remplacement de la bougie du moteur thermique 3 ; cf figure 1.

## Revendications

1) Ensemble portatif comprenant un châssis (1) de support délimitant un volume intérieur (2) utile de forme générale parallélipipédique, un moteur thermique (3), et une machine (4) disposée en ligne avec ledit moteur, accouplée et entraînée par ce dernier, ledit moteur et ladite machine étant montés sur ledit châssis, en étant intégrés dans le volume utile, caractérisé en ce que le châssis de support (1) consiste en un corps creux auto-porteur de sustentation du moteur thermique (3) et de la machine (4), comprenant au moins un élément à double paroi (5a,5b) (6a,6b) fermée sur elle-même, obtenu de manière monobloc en matière plastique, le corps creux ayant généralement une forme épousant au moins une partie du contour du volume intérieur utile (2), et comprenant au moins un plancher (1a) sur lequel sont fixés au travers de la double paroi le moteur (3) et la machine (4), et deux flancs (1b,1c) perpendiculaires audit plancher.

**2)** Ensemble selon la revendication 1, caractérisé en ce que le corps creux (1) auto-porteur comprend deux éléments (5,6), ou flasques, assemblés l'un à l'autre, constitués chacun par une paroi sensiblement droite (5c,6c) correspondant au flanc (1a,1b) du corps creux (1), et un rebord (5d,6d) perpendiculaire à la paroi droite, correspondant pour partie au plancher (1a) du corps creux.

**3)** Ensemble selon la revendication 2, caractérisé en ce que d'une part le moteur (3) et la machine (4) sont solidarisés en ligne l'un à l'autre, pour former un bloc (7) rigide, et d'autre part les deux rebords (5d,6d) des deux flasques respectivement sont fixés au travers de la double paroi (5a,5b) (6a,6b) au bloc rigide (7).

**4)** Ensemble selon la revendication 2, caractérisé en ce que deux bordures droites (5e,6e) des deux rebords (5d,6d) respectivement sont assemblées l'une à l'autre de manière jointive.

**5)** Ensemble selon la revendication 2, caractérisé en ce que deux entailles (5f,6f) des deux rebords (5d,6d) respectivement sont assemblées l'une à l'autre de manière jointive.

**6)** Ensemble selon la revendication 1, caractérisé en ce que les deux flancs (1a,1b) du corps creux intègrent deux poignées (1d,1e) de transport respectivement, situées en vis à vis.

**7)** Ensemble selon la revendication 1, caractérisé en ce qu'un réservoir (8) du combustible nécessaire au moteur (3) thermique, subtantiellement plat, est disposé au-dessus du moteur (3) et de la machine (4) et relie les deux flancs (1b,1c) du corps creux auto-porteur.

**8)** Ensemble selon la revendication 7, caractérisé en ce que deux bords droits (8a,8b) du réservoir (8) sont assemblés aux deux flancs (1b,1c) du corps creux (1) auto-porteur, par un emboîtement en queue d'aronde.

**9)** Ensemble selon la revendication 1, caractérisé en ce que l'une (1f) des faces du corps (1) creux auto-porteur, située entre les deux flancs (1b,1c), est en relation avec l'aspiration de l'air nécessaire au moteur (3) thermique, et l'un (1b) des flancs du corps creux auto-porteur comporte un passage (9) transversal, en relation avec l'échappement du moteur thermique (3).

**10)** Ensemble selon la revendication 1, caractérisé en ce que l'une (1g) des faces du corps creux (1) auto-porteur est en relation à la fois avec l'entrée d'air frais et la sortie d'air chaud, nécessaires au fonctionnement de la machine (4).

**FIG_1**

**FIG_2**

FIG.3

FIG.4

FIG.5

FIG.6

FIG.7

FIG.8

8

Office européen
des brevets

**RAPPORT DE RECHERCHE EUROPEENNE**

Numero de la demande

EP  91 42 0050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 141 782  (HONDA)<br>* page 1, lignes 76-105; page 2, lignes 6-16; figure 1 *<br>--- | 1,6,9,10 | F 02 B   63/04<br>F 16 M    3/00 |
| A | US-A-4 721 070  (TANAKA et al.)<br>* revendication 1 *<br>----- | 1,2 | |

**DOMAINES TECHNIQUES RECHERCHES (Int. Cl.5)**

F 02 B
F 16 M
B 65 D

Le présent rapport a été établi pour toutes les revendications

| Lieu de la recherche | Date d'achèvement de la recherche | Examinateur |
|---|---|---|
| BERLIN | 16-05-1991 | NOVELLI B. |